# EUROPEAN PATENT APPLICATION

(11) **EP 3 260 513 A1**
(43) Date of publication of application: **27.12.2017**
(21) Application number: 17020217.0
(22) Date of filing: 19.05.2017
(51) Int. Cl.: C09J 189/00, C09J 105/00, C08L 5/00

(54) **COMPOSITION OF GLUES FOR GRAPHIC ARTS FORMULATED WITH SUBSTANCES USED IN THE FOOD SECTOR**

(30) Priority: 27.05.2016 IT UA20163849
(71) Applicant: Marzagalli, Marco, 26010 Ripalta Cremasca, Cremona (IT)
(72) Inventor: Marzagalli, Marco, 26010 Ripalta Cremasca, Cremona (IT)

(57) **Abstract**

The glues in question are made up of: Arabic gum (E414), water, food substances, food additives admitted at European level that are identified by the letter E followed by a numerical mark belonging to the food additives list between E100 and E1520. In the formulation there are no sugar, neither starch nor ammonia.

All components are of food degree and there are not components containing gluten nor the same is purposely added by us.

The percentage of the various components is very variable as it depends on which supports you want to laminate and on the industrial application in the graphic arts that needs to be done: for gun and/or spray applications the viscosity will be about <500 Cps at 25° C; for disk or roller applications the viscosity will be about > 500 Cps at 25° C.

## Description

### Field of the invention

This invention refers to the composition of glues that can be used industrially to laminate paper and/or cardboard with paper and/or cardboard or paper and/or cardboard with plastic films (it is possible also to laminate plastic film with plastic film but it needs a heat source to evaporate the water). The invention in particular refers to the fact that the formulation contains only substances used in the food sector that is food constituents or food and/or food additives using water as the only solvent, without the addition of ammonia and/or other non-food solvents.

It is important to point out that the components of this invention are not only defined as suitable substances for "food contact" with or without a specific SML, but they are substances that make up food and therefore they are food themselves.

### State of art

By definition glue (or adhesive) is " a substance able to make adhering permanently one surface to another, even if composed of different materials".

In fact two materials are glued if the glue or the adhesive between them causes such bonds to be so strong as to create "an internal collapse of the molecular system" of one of the two materials in contact, or between the adhesion surfaces.

There are many types of stickers available on the market today, which can be divided into products of synthetic origin (called adhesives) and product of animal or vegetable origin (called glues).

The first ones, that is, those of synthetic origin, we may say that they may in general be acrylic based, polyvinyl acetate (vinavil) based, epoxide based, phenolnirylated based, neoprene based or gum.

Synthetic adhesives, such as those described in patents number US2016303277 or IT2010MI00024 or PL411263, consist of macromolecules and a fluid part consisting of solvents or water.

However, the attention to this industrial invention needs to be addressed more to the natural glues, such as that described in patent number CN105670019 or US2016215086, which we could divide into:
- Of vegetable origin: they are usually based on flour starch and flour, and often contain gluten such as those described in Patent EP0368136 or as in the Patent DE1 02004011231
- Of animal origin: they usually contain jelly, casein, proteins

Usually, at present, industrial vegetale glues are for example those described in the Patent n° ITMI20102324 or in n° WO 01/92401 or in n° DE102004011231. Therefore they are not formulated ***only*** with food using water as the only solvent, without ammonia.

The graphic arts sector, and especially the packaging industry, is now trying to find solutions that are the least harmful possible by using products that are as little as possible subject to the phenomenon of migration.

The choice of the support is always a fundamental starting point, but as to glue, we have formulated a glue starting from the concept of a vegetable glue.

*"The object of this industrial invention consist of a "food glue" to be used in the packaging sector: for the first time we speak of a glue formulated entirely with foodstuffs, without containing sugars and starches, usable with industrial gluing machines".*

The glue we propose in this invention is formulated with food substances (as defined in the "Field of the Invention") in combination with food additives admitted at European level which are identified with the letter E followed by a numerical mark belonging to the list of food additives between E100 and E1520.

The ESSENTIAL components of this range of glues are: the Arabic gum of food grade, the food coloring (included in the list from E100 to E197), the preservative (included in the list from E200 to E297), water as solvent and at least a food additive (included in the list E between E300 and E1520 excluding E414 because it is Arabic gum) and/or a food substance (excluding starches and sugar) able to give a fundamental characteristic to the kind of glue you want to obtain; in fact thanks to an appropriate choice of the food additive or food substance it is possible to formulate glues that are more or less soft, that have greater resistance to thermal stress (both high and low temperatures) when required; that allow adhesion between paper and plastic materials and therefore a glue, for example, with acid groups able to attack better the plastic surface etc.... In the easier case, for example, the addition of food fibers (as described in Example 1) allows to obtain a glue that first of all can stand both in low temperature and in high temperature conditions for a long time, moreover it allows to obtain a certain viscosity that makes the glue industrially applicable while maintaining a soft film and finally it helps the drying of the film; as a matter of fact, if the viscosity required for spray application (example 1) was achieved by using only the Arabic gum , the resulting film would for example be too rigid and slower in the drying. Thinking instead of a metallic plastic material you will need, for example, acid groups able to adhere better to the metalized but which do not make the support inclined to break; in case you wish to decrease the drying time by not adding solvents, as our formulation excludes ammonia and anything that is not food, you can add, for example, salts (strictly foodstuffs) that can help the water absorption. The cases in graphic arts sector are many therefore is absolutely necessary and crucial the choice and the addition of at least a food additive (excluding preservative) and/or a food substance (excluding starch and sugar).

The Arabic gum (of food grade, also known as E 414) used in this invention is a natural gum obtained from an exudate produced by *Acacia senegal* and *Acacia seyal* trees of South Sahara (Sahel region), and arrived in Europe through Arab traders.

Arabic gum is produced, in the form of large nodules, from the trees following a natural process called "gummosis" aimed at healing or filling the wounds that are caused on the tree bark. If the bark of the trees is cut, the rubber will be produced to close the cut; this process lasts from 3 to 8 weeks.

In detail, Arabic gum is a combination complex of oligosaccharides arabinogalatins, polysaccharides and glycoproteins. Depending on the source, glycan components contain a greater proportion of L-arabinose relative to D-galactose (Acacia seyal) or D- galactose relative to L-arabinose (Acacia senegal).

It is soluble in water, it creates a heat-restisting film and it is used in several sectors as, for example, as thickener , condensing agent, emulsifier and structuring in cosmetics; as stabilizer of aromas and essential oils in the production of drinks, for example in concentrates for soft drinks. Arabic gum is used also in confectionery for the production of the traditional fruit gummy candies and tablets, as foam stabilizing for the production of gummy candies based on albumen, jelly and sugar. It is used as varnish for marzipan or sugar paste, as glue to gluing pieces of sugar between them as described in the article "Gum Arabic, what it is used for?" (URL: http://www.lindyscakes.co.uk/2011/08/09waht-is-gum-arabic-used -for/) or it is used as glue for paper in its simplest formula by mixing it with water with the addition of glycerine or lavender essential oil with the purpose of preservative and aromatherapy as described in the article "Gettin' Sticky With It-5 Homemade Glue&Paste Recipes (Gluten-Free & Vegan recipes included)-Natural Hippy Homeschool Series - TheHippyHomemaker" (URL:http://www.thehippyhomemaker.com/gettin-sticky-with-it-homemade-glue-paste/). Arabic gum is used also in wine sector and as color pigment stabilizer in water colors and inks.

Arabic gum have always been used in the field of fine arts in particular to formulate varnishes, paints or temperas, but in this invention we talk about Arabic gum as the main ingredient in the formulations of glues in which all components (from the Arabic gum itself chosen of food degree) are food and/or food additives; this aspect already identifies the difference with the previous glues above mentioned because, with reference to the first one (lindyscakes) our formulations contain not only water and Arabic gum as main constituents, but also food preservative, food coloring and at least another food additive and/or a food substance with various functions depending on the substrates you will need to glue: you may chose a plasticizer, a pH corrector, a thickener, etc; our invention differs also from the second one above mentioned (Hippy Homeschool) for the same reasons as the first one and moreover because in the receipt of the "Hippy Homeschool" is present the lavender essential oil which cannot be ingested, therefore it is not food and/or a food additive; the range of glues belonging to this invention is formulated only with food and/or food additives dissolved in water.

The percentage of components depends on the viscosity of glue you wish to obtain which is often related to the industrial application that occurs, for example by spray, by gun, by roller or by disk; that this you will need a fluid glue (usually from 100 to 500 Cps at 25° C) in the first two cases while for roller and disk you will need a glue with a higher viscosity (usually higher than 500 Cps at 25° C). In any case you will always get glues that will be liquid but not gelatinous as described, for example, in patent US4175996 or in patent US4187119.

However, it is possible to define an interval in which the components of this series of glues are present in the formulas: Arabic gum, for example, is present in a variable percentage up to 80%; food coloring in a percentage up to 15%; food preservative in a maximum percentage up to 10%; water in a variable percentage from 5% to 85% without the addition of ammonia, which is often present in the glues as described, for example, in patent DE102204011231. The other food additives and/or food substances (excluding sugar and starch) are present either individually or in combination with other food substance and/or additives according to the final result in a percentage up to 45%. We DO NOT use sugars or starch in our formulations because we have verified that they are substances that can favor the mold formulation; in particular starch has always been used as a component, as described in various patents, for example in patent EP0368136 or in patent WO0192401.

The process for obtaining the series of glues in the object of the present invention consists in placing the solvent, i.e. water, in a vessel, adding "flush" the Arabic gum under continuous stirring; you will have a spontaneous exothermic process with a rise in temperature of about 10° C; once the Arabic gum is melted, the remaining elements and additives can be added; when all the solids are dissolved, a check is made to make sure that there has been no solvent loss (water); if so, the evaporated part is added and the mixture is stirred for a few minutes. If the additive and / or the food substance requires a slight heat to favor its dissolution, it is added "flush" with the Arabic gum because as it is a spontaneous exothermic process, this condition promotes its solubility.

Formulating, as example 1, a glue that first dissolves 40 mg of Arabic gum in 49.5 grams of water and in addition 9 grams of dietary fiber, 0.5 grams of titanium dioxide E171 and 1 grams of potassium sorbate as a preservative , we have been able to obtain a glue that can be applied with an industrial system called "disk" characterized by a viscosity> 500 Cps at 25 °C resulting in the following result:
✔ At room temperature: the food glue described in Example 1 was applied by matching cardboard with cardboard by contacting "face to face", "face to back", "back to back". These applications have been viewed at constant intervals for 3 months and the materials have remained glued as applied;
✔ Hot : the food glue described in Example 1 was applied by matching cardboard with cardboard by contacting "face to face", "face to back", "back to back". These applications were placed in a stove at 80° C and were viewed at constant intervals for 3 months and the materials have remained glued as applied;
✔ Cold: the food glue described in Example 1 was applied by matching cardboard with cardboard by contacting "face to face", "face to back", "back to back". These applications were placed in a freezer at - 18° C and were viewed at constant intervals for 3 months and the materials have remained glued as applied;

Formulating, as example 2, a glue that first dissolves 20 grams of Arabic gum in 71.5 grams of water and in addition 5 grams of powdered food fat, 1.5 grams of potassium sorbate as a preservative and 2 grams of E171, we have been able to obtain a glue that can be applied with an industrial system called "gun" characterized by a viscosity <500 Cps at 25 °C resulting in the following result:
✔ At room temperature: the food glue described in Example 2 was applied by matching cardboard with plastic material coming from corn. These applications have been viewed at constant intervals for 3 months and the materials have remained glued as applied;
✔ Hot : the food glue described in Example 2 was applied by matching cardboard with plastic material coming from corn. These applications were placed in a stove at 80° C and were viewed at constant intervals for 3 months and the materials have remained glued as applied;
✔ Cold: the food glue described in Example 2 was applied by matching cardboard with plastic material coming form corn. These applications were placed in a freezer at -18° C and were viewed at constant intervals for 3 months and the materials have remained glued as applied;

The examples given herein have only an explanatory but not limitative function; as explained in the description the percentages and the type of components can vary but ***the absolute condition*** is that any components, whether solid or liquid, is a food substance and/or a food additive.

Therefore innovation consist in giving the graphic arts sector a product for industrial use, that is applicable to industrial methods that are currently in use in the field including gun and / or spray application rather than disk or roller, formulated with ***ONLY*** food raw materials including a constantly present element, that is Arabic gum, having a molecular weight between 400.000 and 1.000.000 Dalton: this molecular weight tends do decrease at the incresase of filtrations, the higher values of molecular weight are typical of the original type KORDOFAN.

The fact that Arabic gum has the indicated molecular weight value guarantees greater safety to the formulation as substances with a molecular weight greater than 1000 Da, even if ingested, are not absorbed by the body in the gastrointestinal tract and therefore do not have a toxicological risk according to EFSA (European Food Safety Authority).

This solution is addresses not only the food packaging industry, but all those graphic arts applications that include, for example, manipulation by children who often touch objects and then take their hands to the mouth or even put in contact the object with the mouth; it involves, of course, paper materials of different thickness which are in contact with each other or paper material with plastics or plastics with plastics. In this latter case, a heat source is needed to allow the evaporation of the water "imprisoned" between the plastic supports.

In order to allow industrial use in the packaging industry, mold and yeast formation analysis was carried out both in closed and open jar; we have been able to verify that the formulations we are proposing are not subject to significant formation of molds or yeasts if stored in closed cans for 180 days; in cans always open there are not significant molds or yeast formations up to 120 days. The open jar condition is a limit condition as the presence of water is continuous; but it has been analyzed to hypothesize how much mold or yeast formation is likely to be if, when applied, the glue does not dry out perfectly; in the case of application we are therefore in a condition in which by evaporation or by absorption water spontaneously departs, although this is not done immediately. Therefore, at industrial level, we believe that the condition that for 120 days the applied glue layer may remain wet can never happen; however, if this happened, the analyzes carried out showed that there would not be significant molds and yeast formations.

It is also worth pointing out that the components chosen do not contain gluten as is the case, for example, in patent WO 0192401.

A further advantage that the above mentioned glues present is not only in relation to the "safety" of the finished product, but it also starts from the greater safety of manipulating the initial product since the operator who daily uses such glues would have contact with a material that already in the liquid state is formulated with food raw materials without gluten.

## Claims

1. Composition of glues which can be used in the industrial field including food grade Arabic gum (E414) dissolved in water, food coloring (included in the list from E100 to E197), food preserver (included in the list from E200 to E297), to which it is added at least one food additive (from E300 to E1520 excluding E414 because it is Arabic gum) and/or a food substance (excluding starch and sugar).

2. Composition as claimed in Claim 1 in which food grade Arabic gum (E 414) is present at a concentration up to 80% in weight of composition.

3. Composition as claimed in Claim 1 and 2 in which food coloring (included in the list from E100 to E197) is present at a concentration up to 15% in weight of composition.

4. Composition as claimed in any Claim from 1 to 3 in which food preserver (included in the list from E200 to E297) has a concentration equal to or less than 10% in weight of composition.

5. Composition as claimed in any Claim from 1 to 4 in which food additive (included from E300 to E1520 excluding E414 because it is Arabic gum) and/or a food substance (excluding starch and sugar) are present at a concentration up to 45% in weight of composition.

6. Composition as claimed in any Claim from 1 to 5 in which water has a concentration between 5% and 85% in weigth of composition.

7. Composition as claimed in any Claim from 1 to 6 in which the raw materials used do not contain gluten nor the same is purposely added by us.

8. Composition as claimed in any Claim from 1 to 7 in which ammonia is not present.

9. Composition as claimed in any Claim from 1 to 8 in which no sugar or starch is present.

10. Composition as claimed in any Claim from 1 to 9 in which each component chosen is of food grade.

11. Composition as claimed in any Claim from 1 to 10, in liquid and non-gelatinous form with viscosity usually less than 500 Cps at 25° C for glue applications with gun and/or spray and with viscosity usually > 500 Cps at 25° C for roller and/or disk applications.

12. Composition as claimed in any Claim from 1 to 11 used in the graphic arts industry applicable with machines currently in use in the filed involving the application with gun and/or spray and/or roller and/or disk.
